Europäisches Patentamt

European Patent Office

Office européen des brevets

(11) Veröffentlichungsnummer: **0 277 293**
B1

# (12) EUROPÄISCHE PATENTSCHRIFT

(45) Veröffentlichungstag der Patentschrift:
17.01.90

(21) Anmeldenummer: 87116901.7

(22) Anmeldetag: 17.11.87

(51) Int. Cl.⁴: **B62D 25/20**, B60H 1/00

(54) **Bodengruppe für ein Fahrzeug, insbesondere für ein Kraftfahrzeug.**

(30) Priorität: 23.01.87 DE 3701911

(43) Veröffentlichungstag der Anmeldung:
10.08.88 Patentblatt 88/32

(45) Bekanntmachung des Hinweises auf die Patenterteilung:
17.01.90 Patentblatt 90/3

(84) Benannte Vertragsstaaten:
DE ES FR GB IT

(56) Entgegenhaltungen:
DE-B- 1 275 371
DE-B- 2 329 985
DE-U- 1 727 916
DE-U- 1 857 373
FR-A- 1 079 639

PATENT ABSTRACTS OF JAPAN, Band 8,
Nr. 61 (M-284)[1498], 23. März 1984; &
JP-A-58 211 976 (NISSAN JIDOSHA K.K.) 09-12-1983

(73) Patentinhaber: **Dr.Ing.h.c. F. Porsche
Aktiengesellschaft, Porschestrasse 42,
D-7000 Stuttgart 40(DE)**

(72) Erfinder: **Düwel, Klaus-Roger, Dipl.-Ing. FH,
Eschwenweg 22, D-7142 Marbach(DE)**
Erfinder: **Eger, Georg, Wilhelm-Busch-Str.23,
D-7141 Hochdorf/Vaihingen(DE)**
Erfinder: **Pross Walter, Parkstr. 23,
D-7032 Sindelfingen(DE)**

# Beschreibung

Die Erfindung bezieht sich auf eine Bodengruppe für ein Fahrzeug, insbesondere für ein Kraftfahrzeug, mit einem in der Bodenmitte angeordneten, in Fahrzeuglängsrichtung verlaufenden Tunnel, wobei innerhalb oder benachbart des Tunnels Triebwerksteile und wenigstens eine Leitung für die Beheizung und/oder Belüftung des Kraftfahrzeugs vorgesehen sind und der Tunnel durch ein Abdeckelement zur Fahrbahn hin verschlossen ist.

Bei einer bekannten Bodengruppe der eingangs genannten Gattung (DE-B 23 29 985) sind lediglich die Triebwerksteile innerhalb des Tunnels angeordnet,wogegen die Leitungen für die Belüftung und/oder Beheizung freiliegend unterhalb des Abdeckelements angebracht sind. Dieser Anordnung haftet der Nachteil an, daß die Leitungen nicht vor Schmutz und mechanischer Beanspruchung geschützt sind und deshalb leicht beschädigt werden können. Durch die zur Fahrbahn hin vorstehenden Leitungen wird die Bodenfreiheit des Fahrzeuges eingeschränkt. Darüber hinaus werden die Strömungsverhältnisse im Unterbodenbereich verschlechtert, was eine Erhöhung des Luftwiderstandsbeiwertes zur Folge hat. Schließlich müssen bei einer Reparatur der Triebwerksteile die Leitungen für die Beheizung und/oder Belüftung demontiert werden, bevor das Abdeckelement abgenommen werden kann, was einen beträchtlichen Aufwand darstellt.

Aus der DE-B 1 275 371 geht eine Bodengruppe für ein Kraftfahrzeug mit einem in Fahrzeuglängsrichtung verlaufenden Tunnel hervor, wobei der Tunnel durch eine rinnenförmige, nach oben hin offene Einpressung der Bodenplatte und ein auf die Oberseite der Bodenplatte aufgesetztes Preßteil gebildet wird. Die Bodenplatte und das Preßteil sind an gleichgerichteten Flanschen durch Punktschweißung miteinander verbunden. Innerhalb des Tunnels ist eine durch ein separates Bauteil gebildete, rohrförmige Leitung angeordnet.

Diese Anordnung haftet der Nachteil an, daß zur Halterung der Leitung innerhalb des Tunnels zusätzliche Befestigungselemente erforderlich sind. Im Reparaturfall ist die Zugänglichkeit zur Leitung stark eingeschränkt, da das Preßteil unlösbar mit der Bodenplatte verbunden ist.

Aufgabe der Erfindung ist es, eine benachbart eines Tunnels angeordnete Leitung zur Beheizung und/oder Belüftung so auszubilden, daß sie bei einfachem Aufbau mit geringem Aufbau montier- und demontierbar ist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die einstückige Ausbildung der Leitung mit dem Abdeckelement eine Tunnelkonstruktion geschaffen wird, die einen einfachen Aufbau aufweist und kostengünstig herstellbar ist. Ferner ist die Leitung für die Beheizung und/oder Belüftung schnell und einfach montier- und demontierbar und im Reparaturfall gut zugänglich. Durch die Ausbildung der Leitung als kastenförmiger Träger wird darüber hinaus die Festigkeit der Karosserie (Biegung, Torsion und Crash) wesentlich verbessert. Zusätzliche Befestigungselemente für die Leitung werden zumindest reduziert.

Ein Ausführungsbeispiel der Erfindung ist in den Zeichnungen dargestellt und wird im folgenden näher erläutert.
Es zeigt

Fig. 1 einen Vertikalschnitt in Fahrzeugquerrichtung durch eine Bodengruppe eines Fahrzeuges,
Fig. 2 eine perspektivische Ansicht von vorne auf die Bodengruppe mit dem Tunnel.

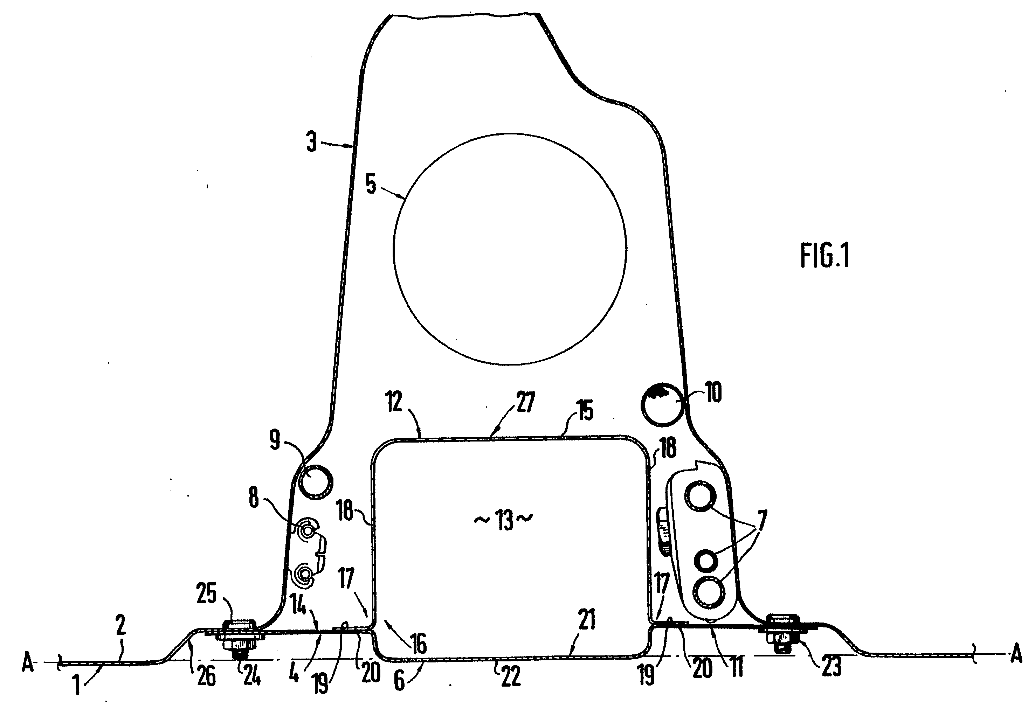

Eine Bodengruppe 1 für ein Kraftfahrzeug umfaßt im dargestellten Bereich ein Bodenblech 2 mit einem in der Bodenmitte angeordneten, in Fahrzeuglängsrichtung verlaufenden Tunnel 3 mit einer nach unten gerichteten Tunnelöffnung 4. Der einstückig mit dem Bodenblech 2 ausgebildete Tunnel 3 dient zur Unterbringung von Triebwerksteilen 5 (z. B. Transaxle-Rohr), sowie Leitungen 6 für die Beheizung und/oder Belüftung des Kraftfahrzeuges. Außerdem sind gemäß Fig. 1 innerhalb des Tunnels Kraftstoffleitungen 7, Bremsleitungen 8, Unterdruckleitungen 9 und elektrische Leitungen 10 untergebracht. Die Tunnelöffnung 4 ist zur Fahrbahn hin durch ein plattenförmiges Abdeckelement 11 verschlossen.

Die Leitung 6 für die Beheizung und/oder Belüftung des Kraftfahrzeuges ist zumindest über einen Teilbereich ihrer Längserstreckung einstückig mit dem Abdeckelement 11 ausgebildet. Entsprechend Fig. 1 wird die Leitung 6 durch das Abdeckelement 11 und ein mit diesem verbundenes Schließteil 12 gebildet, wobei das Abdeckelement 11 und das Schließteil 12 unter Bildung eines Hohlraumes 12 aneinandergesetzt sind. Das Schließteil 12 ist vorzugsweise auf die der Fahrbahn abgekehrten Seite 14 des Abdeckelementes 11 aufgesetzt, d. h., es erstreckt sich verdeckt innerhalb des Tunnels 3. Der Hohlraum 13 kann im Querschnitt rechteckig, quadratisch, kreisrund oder dergleichen ausgebildet sein.

Gemäß Fig. 1 ist das Schließteil 12 durch ein etwa U-förmiges Hutprofil 15 dargestellt, das mit seiner offenen Seite 16 zum Abdeckelement 11 gerichtet ist. An die freien Enden 17 von vertikal ausgerichteten Schenkeln 18 des Hutprofiles 15 sind horizontal abgebogene Stege 19 angeschlossen, die mit parallel dazu verlaufenden Flanschen 20 des Abdeckelementes 11 durch Kleben, Schweißen, Löten oder dergleichen verbunden sind. Das Abdeckelement 11 weist unterhalb des Schließteiles 12 eine rinnenförmige Einprägung 21 auf, deren untere Begrenzungswand 22 in einer gemeinsamen Ebene A-A mit dem Bodenblech 2 verläuft.

Das Schließblech 12 bildet mit dem Abdeckelement 11 eine vormontierte Baueinheit, die angrenzend an den Tunnel 3 lösbar mit dem Bodenblech 2 der Bodengruppe 1 verbunden ist. Zu diesem Zweck sind am Bodenblech 2 örtlich vertikal ausgerichtete Schweißschrauben 23 vorgesehen, deren Gewindeabschnitte 24 zur Fahrbahn hin gerichtet sind, wogegen sich die Kopfbereiche 25 der Schweißschrauben 23 an der der Fahrbahn abgekehrten Seite 14 des Bodenblechs 2 abstützen. Die Schweißschrauben 23 sind im Bereich von sickenartigen Randverstärkungen 26 des Tunnels 3 angeordnet und weisen eine solche Höhe auf, daß die freien Enden der Gewindeabschnitte 24 nicht über die horizontale Ebene A-A hinaus nach unten vorstehen. Zur Befestigung des Abdeckelementes 11 werden von der Unterseite her Muttern auf die Gewindeabschnitte 24 aufgeschraubt, wobei zwischen dem Abdeckelement 11 und den Muttern Unterlagscheiben vorgesehen sind.

Die Leitung 6 für die Beheizung und/oder Belüftung ist als Kastenträger 27 ausgebildet, der sich unterhalb der Triebwerksteile 5 über einen wesentlichen Teil der Breite des Tunnels 3 erstreckt. Die beiden Enden des sich in Fahrzeuglängsrichtung erstreckenden Kastenträgers 27 sind offen ausgebildet. Durch den Kastenträger 27, das Abdeckelement 11 und den Tunnel 3 wird die Festigkeit bzw. Verwindungssteifigkeit der Karosserie erhöht.

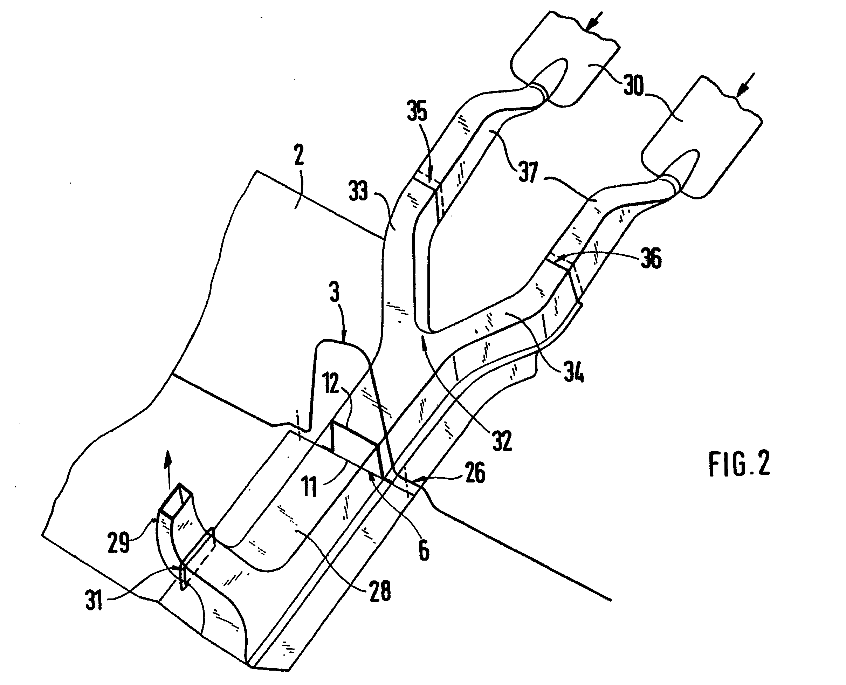

Gemäß Fig. 2 stellt die durch das Abdeckelement 11 und das Schließteil 12 gebildete Leitung 6 einen Teilbereich 28 eines Warmluftkanals 29 einer nicht näher gezeigten Heizanlage für ein Kraftfahrzeug mit luftgekühltem Heckmotor dar, wobei sich der Warmluftkanal 29 von heckseitig angeordneten Wärmetauschern 30 nach vorne bis zu einem im Fahrgastraum angebrachten, nicht näher dargestellten Verteilergerät der Heizanlage erstreckt. Der Teilbereich 28 des Warmluftkanals 29, der einstückig mit dem Abdeckelement 11 ausgebildet ist, weist einen hochgezogenen, vorderen Endbereich 31 auf und teilt sich in einen hinteren Bereich 32 gabelförmig in zwei Teilkanäle 33, 34 auf, die bei 35 und 36 enden. An diese Endbereiche 35, 36 sind jeweils Verbindungsstücke 37 angeschlossen, die zu den dahinterliegenden Wärmetauschern 30 führen, wobei die Verbindungsstücke 37 auf die Endbereiche 35, 36 aufgesteckt sind. Die Verbindungsstücke 37 werden vorzugsweise durch Schläuche aus Kunststoff oder Aluminium gebildet. Die Strömungsrichtung des Warmluftstromes erstreckt sich in Fahrtrichtung des Kraftfahrzeuges.

## Patentansprüche

1. Bodengruppe für ein Fahrzeug, insbesondere ein Kraftfahrzeug, mit einem in der Bodenmitte angeordneten, in Fahrzeuglängsrichtung verlaufenden Tunnel, wobei innerhalb oder benachbart des Tunnels Triebwerksteile und wenigstens eine Leitung für die Beheizung und/oder Belüftung des Kraftfahrzeuges vorgesehen sind und der Tunnel durch ein Abdeckelement zur Fahrbahn hin verschlossen ist, dadurch gekennzeichnet, daß die Leitung (6) für die Beheizung und/oder Belüftung zumindest über einen Teilbereich ihrer Längserstreckung einstückig mit dem Abdeckelement (11) ausgebildet ist.

2. Bodengruppe nach Anspruch 1, dadurch gekennzeichnet, daß die Leitung (6) durch das Abdeckelement (11) und ein Schließteil (12) gebildet wird, wobei das Abdeckelement (11) und das Schließteil (12) unter Bildung eines Hohlraumes (13) aneinandergesetzt sind.

3. Bodengruppe nach Anspruch 1, dadurch gekennzeichnet, daß das Schließteil (12) auf die der Fahrbahn abgekehrten Seite (14) des Abdeckelementes (11) aufgesetzt ist.

4. Bodengruppe nach Anspruch 1, dadurch gekennzeichnet, daß das Schließteil (12) durch ein etwa U-förmig ausgebildetes Hutprofil (15) dargestellt ist, das mit seiner offenen Seite (16) zum Abdeckelement (11) hin gerichtet ist.

5. Bodengruppe nach Anspruch 1, dadurch gekennzeichnet, daß das Abdeckelement (11) mit dem Schließteil (12) eine vormontierte Baueinheit bildet, die lösbar an der Bodengruppe (1) befestigt ist.

6. Bodengruppe nach Anspruch 1, dadurch gekennzeichnet, daß das profilierte Schließteil (12) durch Schweißen, Löten, Kleben oder dergleichen mit dem Abdeckelement (11) verbunden ist.

7. Bodengruppe nach Anspruch 1, dadurch gekennzeichnet, daß die Leitung (6) für die Beheizung und/oder Belüftung die Form eines Kastenträgers (27) aufweist, dessen Enden offen ausgebildet sind.

8. Bodengruppe für ein Fahrzeug, das mit einem luftgekühlten Heckmotor versehen ist, nach Anspruch 1, dadurch gekennzeichnet, daß die einstückig mit dem Abdeckelement (11) ausgebildete Leitung (6) für die Beheizung und/oder Belüftung einen Teilbereich (28) eines Warmluftkanals (29) einer Heizanlage darstellt, wobei der Warmluftkanal (29) an seinem einen Ende mit Wärmetauschern (30) verbunden und an seinem anderen Ende an ein Verteilergerät der Heizanlage angeschlossen ist.

9. Bodengruppe nach Anspruch 8, dadurch gekennzeichnet, daß der Warmluftkanal (29) in einem den Wärmetauschern (30) zugekehrten Bereich (32) gabelförmig ausgebildet ist, wobei jeder der beiden Teilkanäle (33, 34) über ein Verbindungsstück (37) mit einem Wärmetauscher (30) verbunden ist.

## Claims

1. A floor unit for a vehicle, in particular a motor vehicle, with a tunnel arranged in the centre of the floor and extending in the longitudinal direction of the vehicle, wherein gear parts and at least one duct for the heating and/or ventilation of the motor vehicle are provided inside or adjacent to the tunnel and the tunnel is sealed from the roadway by a cover element, characterised in that the duct (6) for the heating and/or ventilation is constructed integrally with the cover element (11) at least over a proportion of its length.

2. A floor unit according to Claim 1, characterised in that the duct (6) is formed by the cover element (11) and a closure member (12), the cover element (11) and the closure member (12) being placed against one another to form a cavity (13).

3. A floor unit according to Claim 1, characterised in that the closure member (12) is placed on the side (14) of the cover element (11) remote from the roadway.

4. A floor unit according to Claim 1, characterised in that the closure member (12) is represented by a substantially U-shaped hat profile (15) which is directed with its open end (16) toward the cover element (11).

5. A floor unit according to Claim 1, characterised in that the cover element (11) forms, with the closure member (12), a pre-assembled constructional unit which is fixed detachably to the floor unit (1).

6. A floor unit according to Claim 1, characterised in that the profiled closure member (12) is connected to the cover element (11) by welding, soldering, adhesion or the like.

7. A floor unit according to Claim 1, characterised in that the duct (6) for heating and/or ventilation has the form of a box girder (27), the ends of which are open.

8. A floor unit according to Claim 1, for a vehicle provided with an air-cooled rear engine, characterised in that the duct (6) for heating and/or ventilation, constructed integrally with the cover element (11), represents a portion (28) of a hot air duct (29) of a heating installation, the hot air duct (29) being connected to heat exchangers (30) at one end and being attached to a distributor device of the heating installation at its other end.

9. A floor unit according to Claim 8, characterised in that the hot air duct (29) is fork-shaped in a region (32) facing the heat exchangers (30), each of the two partial ducts (33, 34) being connected to a heat exchanger (30) via a connecting piece (37).

## Revendications

1. Dessous de caisse, notamment pour un véhicule automobile, comportant un tunnel disposé au centre du dessous de caisse et s'étendant dans la direction longitudinale du véhicule, des parties de transmission et au moins une conduite de chauffage et/ou de ventilation du véhicule étant prévues à l'intérieur ou au voisinage du tunnel et le tunnel étant obturé par rapport à la piste de roulement à l'aide d'un élément de recouvrement, caractérisé en ce que la conduite (6) destinée au chauffage et/ou à la ventilation est réalisée d'une seule pièce avec l'élément de recouvrement (11), au moins sur une zone partielle de sa longueur.

2. Dessous de caisse selon la revendication 1, caractérisé en ce que la conduite (6) est formée par l'élément de recouvrement (11) et une partie d'obturation (12), l'élément de recouvrement (11) et la partie d'obturation (12) étant placée l'un contre l'autre en formant un espace creux (13).

3. Dessous de caisse selon la revendication 1, caractérisé en ce que la partie d'obturation (12) est appliquée sur la face (14) de l'élément de recouvrement (11) qui est opposée à la piste de roulement.

4. Dessous de caisse selon la revendication 1, caractérisé en ce que la partie d'obturation (12) est représentée par un profil en chapeau (15) réalisé à peu près en forme de U, qui est orienté avec sa face ouverte (16) tournée vers l'élément de recouvrement (11).

5. Dessous de caisse selon la revendication 1, caractérisé en ce que l'élément de recouvrement (11) forme avec la partie d'obturation (12) un ensemble de construction prémonté qui est fixé de manière démontable au dessous de caisse (1).

6. Dessous de caisse selon la revendication 1, caractérisé en ce que la partie d'obturation profilée (12) est reliée à l'élément de recouvrement (11) par soudage, brasage, collage ou similaire.

7. Dessous de caisse selon la revendication 1, caractérisé en ce la la conduite (6) destinée au chauffage et/ou à la ventilation présente la forme d'une poutre en caisson (27) dont les extrémités sont ouvertes.

8. Dessous de caisse pour un véhicule pourvu d'un moteur arrière, selon la revendication 1, caractérisé en ce que la conduite (6) destinée au chauffage et/ou à la ventilation et réalisée d'une seule pièce avec l'élément de recouvrement (1) constitue une zone partielle (28) d'un canal d'air chaud (29) d'une installation de chauffage, le canal d'air chaud (29) étant relié à l'une de ses extrémités à des échangeurs de chaleur (30) et raccordé à son autre extrémité à un appareil de distribution de l'installation de chauffage.

9. Dessous de caisse selon la revendication 1, caractérisé en ce que le canal d'air chaud (29) est réalisé en forme de fourche dans une zone tournée vers les échangeurs de chaleur (30), chacun des deux canaux (33, 34) étant relié à un échangeur de chaleur (30), par l'intermédiaire d'une pièce de liaison (37).

FIG.1

EP 0 277 293 B1

FIG.2

EP 0 277 293 B1